# EUROPEAN PATENT SPECIFICATION

(11) **EP 4 455 649 B1**
(45) Date of publication and mention of the grant of the patent: **25.03.2026**
(21) Application number: 21863058.0
(22) Date of filing: 22.12.2021
(51) Int. Cl.: G01N 23/00, G01T 1/169

(54) **HIGH RESOLUTION RADIOGRAPHIC INSPECTION SYSTEM FOR NUCLEAR FUEL RODS**
HOCHAUFLÖSENDES RADIOGRAPHISCHES INSPEKTIONSSYSTEM FÜR KERNREAKTORBRENNSTÄBE
SYSTÈME D'INSPECTION RADIOGRAPHIQUE À HAUTE RÉSOLUTION POUR DES BARRES DE COMBUSTIBLE NUCLÉAIRE

(43) Date of publication of application: 30.10.2024
(73) Proprietor: Enusa Industrias Avanzadas S.A. S.M.E., 28040 Madrid (ES); Novadep Scientific SL, 47004 Valladolid (ES)
(72) Inventor: SOLÓRZANO QUIJANO, Eusebio, 47004 VALLADOLID (ES); RAMOS GALLARDO, Ángel, 28040 MADRID (ES)
(74) Representative: Isern Patentes y Marcas S.L.
(86) International application number: PCT/ES2021/070924
(87) International publication number: WO 2023/118618

(56) References cited:
- CN-A- 110 108 730
- CN-U- 214 408 759
- JP-A- 2011 043 474
- JP-B2- 2 848 494

## Description

### TECHNICAL SECTOR

The invention belongs to the nuclear energy sector, specifically that of the manufacture and inspection of nuclear fuel rods.

More particularly, the present invention relates to a system for the digital radiography inspection of fuel rods, according to claim 1. The system is intended for inspection of sealing weld and circular welds of nuclear fuel rods of the PWR and BWR type, but it is not limited to these types of rods and can be used for full rod inspection.

### STATE OF THE ART

Known fuel rod inspection systems are systems that traditionally use radiographic film. The few known digital systems have limited spatial resolution. In addition, the digital detector that is used suffers a significant degradation over time, which implies additional costs in the maintenance of the installation.

In general, any digital X-ray (RX) system that allows high contrast resolution (such as that required in the case of the nuclear energy sector) at energies of more than 200kV has inherently limited spatial resolution associated with it. The origin of this limitation is the need to use a scintillator capable of absorbing these high energies, for which it is necessary to use high-density scintillators with thicknesses in the 0.7mm-1mm range. The scattering of the light generated by these very thick scintillators (generally powder or polycrystalline) limits the spatial resolution of digital RX systems to a resolution of 150 microns or higher.

At present, most of the RX (generic) digital inspection systems have scintillator panels integrated on large digitizer systems, forming the so-called DR (digital radiography, for its acronym in English) or flat panels. With these digital X-ray systems, it is possible to generate high resolution radiographic images, but this requires optical magnification. For example, a microfocus tube (focus size less than 25 microns) in combination with a 200 micron pixel size detector can generate images at energies greater than 200kV with a spatial resolution greater than 5 microns, but for this it is necessary to use a high optical magnification, which is achieved by placing the object very close to the RX tube.

### SUMMARY OF THE INVENTION

The digital radiography system of the invention allows the realization of high resolution radiographs with a native pixel size of less than 25 microns making use of conventional X-ray tubes without the need for optical magnification, by virtue of the use of scintillating materials of suitable sizes and thicknesses and a 90° optical configuration. In addition, it guarantees the durability of the digitizer system over time due to its special internal configuration. Another innovative aspect of the idea system is its ability to generate images with sufficient resolution and contrast for this application in times less than five seconds. The system of the invention thus comprises an X-ray generator tube and an X-ray detector system, in turn formed by a scintillator (4) with a thickness between 0.5 and 3mm and a density of at least 4.5 g/cm³, the scintillator being made up of unstructured monocrystalline materials such as, BGO, PWO, LYSO:Ce, LuAg:Ce, YAG:Ce, a mirror with high reflectivity, of at least 95%, an optical system (6) and a S-CMOS camera with high quantum efficiency, positioned so that the axes of the optical system (6) and the camera (7) are perpendicular to the direction of transmission of the X-rays and to the axis of the scintillator (that is, the scintillator is the first element of the detection system in the direction of propagation of the rays, followed by the mirror that allows positioning the optical lens system and the camera in a configuration at 90° from the direction of propagation of the rays). Preferably, but not necessarily, the scintillator comprises an unstructured monolithic material. The x-ray generator tube and detector system are preferably surrounded by a lead and steel shield.

### BRIEF DESCRIPTION OF THE FIGURES

In order to help a better understanding of the features of the invention and to complement this description, the following figures are attached as an integral part thereof, the nature of which is illustrative and not limiting:
Figure 1 shows the essential elements of the invention and its spatial configuration.
Figure 2 shows a detail of the fundamental elements in the detector system.

### DETAILED DESCRIPTION

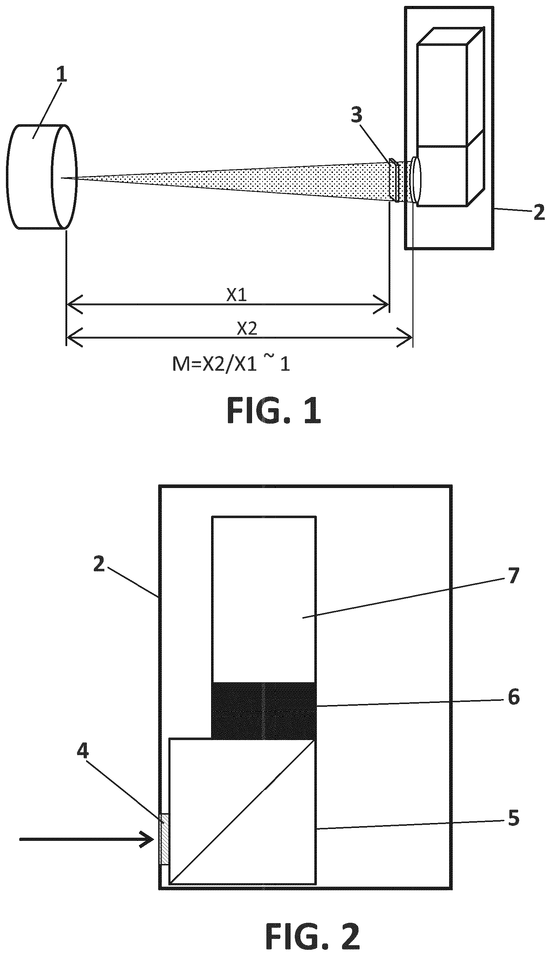

With reference to figure 1, the invention comprises an X-ray generator tube (1) and an X-ray detector system (2) that are separated by a distance X2
The nuclear fuel rod (3) is at a distance X1 from the ray generator tube (1). We will call magnification M the ratio of these distances (X2 / X1).

In turn, the X-ray detector system (2) is composed of a scintillator (4), a mirror with a reflectivity of at least 95% (5), an optical system (6), a SCMOS camera with high quantum efficiency (7).

The X-ray generator tube is a conventional millifocal tube with a focal size between 0.4mm and 1mm. Its maximum emission energy shall be between 225kV and 320kV. The system will typically operate between 215kV and 270kV. Alternatively it is possible to use a microfocus tube up to 240kV or 300kV. The tube-detector distance (X2) varies between 200 and 600mm depending on the current available according to the type of tube used.

The X-ray detector assembly is a proprietary system manufactured for this purpose. This set allows obtaining images with spatial resolutions between 7 and 15 micrometers / pixel at a matrix resolution of 2048x2048 pixels or spatial resolutions between 14 and 30 micrometers / pixel at a matrix resolution of 1024x1024.

The X-ray detector system offers a spatial and contrast resolution greater than 2-2T according to the radiographic quality parameters indicated in ASTM E 1025-98 for a total thickness of 11mm of Zr (Zircalloy 500) or greater. It is thus possible to offer a sufficient spatial and contrast resolution to observe 2-T qualities.

The scintillator (4) shall have a thickness between 0.5 and 3mm and a density of at least 4.5 g/cm³. It is made up of unstructured monocrystalline materials such as, BGO, PWO, LYSO: Ce, LuAg: Ce, YAG: Ce, etc. These materials are preferable, based on their high density, high photonic performance, their spectral emission range, and the short decay times of these materials.

The optical system (6) consists of a series of high-resolution lenses that allow the scintillator surface to be focused at the required resolution. The 90° configuration of the optical system (6) with respect to the scintillator (4) through the use of the mirror (5) increases the useful life of the detector system since the optical and electronic elements are outside the generated RX beam.

The camera (7) having high quantum efficiency (greater than 80%) is an S-CMOS camera and, preferably, cooled by Peltier.

The system manages to generate images with the resolutions and qualities mentioned in exposure times equivalent to or less than five seconds. The exposure can consist of a single exposure for a long time or repeated exposures at a shorter time.

The following table shows the results obtained (resolution) for different types of scintillator (composite, thickness) and configuration (magnification, exposure time).

| Scintillator Type | Chemical formula | Density (g/cm3) | Thickness (mm) | Diameter (mm) | M | Exposure time (s) | Obtained resolution 1x1 (µm) |
|---|---|---|---|---|---|---|---|
| LuAG:Ce | Lu3Al5O12:Ce | 6.73 | 1.5 | 25 | 1.1 | 3 | 14 |
| GAGG:Ce | Gd3Al2Ga3O12:Ce | 6.63 | 0.9 | 20 | 1.08 | 4 | 10 |
| YAG:Ce | Y3Al5O12:Ce(0.2-0.4) | 4.57 | 1.2 | 25 | 1.06 | 5 | 11 |
| LuAG:Ce | Lu3Al5O12:Ce | 6.73 | 1 | 25 | 1.1 | 3.5 | 10 |
| BGO | Bi12GeO20 | 7.13 | 0.5 | 25 | 1.05 | 5 | 6 |
| PWO | PbWO₄ | 8.24 | 0.5 | 25 | 1.1 | 5 | 8 |
| LYSO:Ce | (LuY)2SiO5:Ce | 7.4 | 0.75 | 25 | 1.15 | 4 | 9 |

The scintillator used in the experimental data collection has a diameter between 20 and 25mm but its sizes are not limited to this particular implementation.

The detector system offers an extraordinary durability of all its components, not being noticeable degradation by radiation of any of them. In particular, the scintillator shows a loss of light conversion efficiency of less than 3% at doses equivalent to 5000h of inspection. Likewise, the non-aligned configuration of the optical components and the shielding of the detector system allow a great durability of the digital components of the system, not being affected by radiation in the indicated working hours.

The x-ray generator tube and detection system are surrounded by shielding. Shielding has the fundamental function of preventing radiation from escaping to the outside and protecting workers of the environment. It is made of lead and steel as fundamental materials and is thick enough to prevent doses at 0.1m from any point on its surface from exceeding 1microSv/h. Said shielding has very narrow entry and exit cavities to allow the entry and exit of the rods in its interior.

A system for positioning and turning the rods allows the rods to be moved longitudinally, allowing them to be loaded and unloaded in the irradiation area. Preferably, it also allows the rods to rotate on their axis in order to irradiate the upper and lower caps at different angles.

The invention has a control system composed of a processor (preferably a PC) and an interface that allow images to be taken and stored, communication between the mechanical and optical parts, and actuation on the movement of the rods.

In view of this description and figures, the person skilled in the art will be able to understand that the invention has been described according to some preferred embodiments thereof, but that multiple variations can be introduced in said preferred embodiments, without exceeding the object of the invention as claimed. The invention is defined by the appended claims.

## Claims

1. High resolution radiographic inspection system for nuclear fuel rods comprising an X-ray generator tube (1) and an X-ray detector system (2), **characterized in that** the X-ray detector system (2) comprises a scintillator (4) with a thickness between 0.5 and 3mm and a density of at least 4.5 g/cm³, the scintillator being made up of unstructured monocrystalline materials such as, BGO, PWO, LYSO: Ce, LuAg: Ce, YAG: Ce, a mirror with a reflectivity of at least 95% (5), an optical system (6) and a high quantum efficiency S-CMOS camera (7), positioned so that the axis of the optical system (6) and the camera (7) is perpendicular to the direction of transmission of the X-rays and to the axis of the scintillator (4).

2. Radiographic inspection system according to claim 1, **characterized in that** the X-ray generator tube (1) and the detector system (2) are surrounded by a lead and steel shield.

## Patentansprüche

1. Hochauflösendes radiographisches Inspektionssystem für Kernreaktorbrennstäbe, umfassend eine Röntgengeneratorröhre (1) und ein Röntgenerkennungssystem (2), **dadurch gekennzeichnet, dass** das Röntgenerkennungssystem (2) einen Szintillator (4) mit einer Dicke zwischen 0,5 und 3 mm und einer Dichte von mindestens 4,5 g/cm³ umfasst, wobei der Szintillator aus unstrukturierten monokristallinen Materialien wie BGO, PWO, LYSO:Ce, LuAg:Ce, YAG:Ce, einem Spiegel mit einem Reflexionsvermögen von mindestens 95 % (5), einem optischen System (6) und einer S-CMOS-Kamera (7) mit hohem Quantenwirkungsgrad besteht, so positioniert, dass die Achse des optischen Systems (6) und der Kamera (7) senkrecht zur Richtung der Übertragung der Röntgenstrahlen und zur Achse des Szintillators (4) verläuft.

2. Radiographisches Inspektionssystem nach Anspruch 1, **dadurch gekennzeichnet, dass** die Röntgengeneratorröhre (1) und das Erkennungssystem (2) von einem Blei- und Stahlschirm umgeben sind.

## Revendications

1. Système d'inspection radiographique à haute résolution pour crayons de combustible nucléaire comprenant un tube générateur de rayons X (1) et un système de détection de rayons X (2), **caractérisé en ce que** le système de détection de rayons X (2) comprend un scintillateur (4) avec une épaisseur entre 0,5 et 3 mm et une densité d'au moins 4,5 g/cm³, le scintillateur étant constitué de matériaux monocristallins non structurés tels que, BGO, PWO, LYSO : Ce, LuAg : Ce, YAG : Ce, un miroir ayant une réflectivité d'au moins 95 % (5), un système optique (6) et une caméra S-CMOS à haute efficacité quantique (7), positionné de sorte que l'axe du système optique (6) et de la caméra (7) est perpendiculaire à la direction de transmission des rayons X et à l'axe du scintillateur (4).

2. Système d'inspection radiographique selon la revendication 1, **caractérisé en ce que** le tube générateur de rayons X (1) et le système de détection (2) sont entourés d'un écran de plomb et d'acier.
